# EUROPEAN PATENT APPLICATION

(11) **EP 3 082 308 A1**
(43) Date of publication of application: **19.10.2016**
(21) Application number: 16162686.6
(22) Date of filing: 29.03.2016
(51) Int. Cl.: H04L 12/721, H04L 12/717, H04L 12/751

(54) **CENTRALIZED ROUTING METHOD AND APPARATUS AND SYSTEM**

(30) Priority: 17.04.2015 CN 201510184282
(71) Applicant: FUJITSU LIMITED, Kawasaki-shi, Kanagawa 211-8588 (JP)
(72) Inventor: LI, Hongchun, Beijing 100025 (CN); TIAN, Jun, Beijing 100025 (CN)
(74) Representative: Cooper-Rolfe, Elizabeth Louise

(57) **Abstract**

Embodiments of the present disclosure provide a centralized routing method and apparatus and a system. The method includes: transmitting a routing request packet by an ordinary node in a collection network to a centralized routing node, the routing request packet including an address of a source node, an address of a destination node, and routing valid time, of routing requested by the ordinary node; and determining a routing path from the source node to the destination node according to a routing response packet responded by the centralized routing node. With the embodiments of the present disclosure, problems of routing update and maintenance in a centralized routing method are alleviated.

## Description

### Field

The present disclosure relates to the field of communication technologies, and in particular to a centralized routing method and apparatus and a system.

### Background

In a complex network, a large quantity of nodes have no a link for direct communications. Data packets transmitted by the nodes can only reach destination nodes after being forwarded by other nodes. In such a process, a node initially transmitting data is referred to as a global source node, an intermediate node forwarding the data is referred to as a routing node, and a node finally receiving the data is referred to as a global destination node. A routing algorithm is a process to find the needed routing node reaching the global destination node for the global source node.

A large quantity of existing routing methods adopt distributed structures, such as an OLSR (optimized link state routing protocol), and AODV (ad hoc on-demand distance vector routing), etc. In a distributed routing method, all nodes participate in operations related to the routing, and calculate routing paths from a current node to other nodes. According to manners for calculating routing by nodes, the routing methods may further be divided into proactive routing and passive routing. The OLSR method is a proactive routing method based on a link state. That is, even if there exists no data needing to be transmitted, a large quantity of operations related to the routing is still needed. In the OLSR method, the routing node obtains topology information on the whole network, and calculates routing paths reaching to the nodes in the network. The AODV method is a passive routing method based on a distance vector, in which operations related to the routing are only performed in need of transmitting data. In the AODV method, the global source node broadcasts a routing request packet, other nodes update routing cost according to distance vector information, and then forward the routing request packet; and after receiving the routing request packet, the global destination node transmits routing information to the global source node along a path with minimum cost.

With the distributed routing method, the routing process of the network does not depend on individual node, and reliability of the network is improved. However, when the scale of the network becomes large, the distributed method requires that all nodes have very strong performance, synchronization problem of the network information becomes more severe, and a probability of occurrence of a routing loop problem is increased.

Regarding the defect of the distributed routing method, a centralized routing method is proposed. In the centralized routing method, nodes in the network are divided into ordinary nodes and centralized routing nodes. In this method, the ordinary nodes need only to obtain information on their neighboring nodes, and do not participate in calculation of the routing. And the centralized routing nodes have topology information on the whole network, and are responsible for calculating routing paths for other nodes. When the ordinary nodes need routing information, they may inquire the centralized nodes. Hence, in the centralized routing method, the ordinary nodes are simple in functions, need very small calculation resources and communication resources, and have lower cost. And the network needs only a small quantity of centralized routing nodes, and the rest most nodes are ordinary nodes. Therefore, the use of the centralized routing method may lower the cost of the network system. Furthermore, when the network performs information synchronization, only the centralized routing nodes need the topology information on the whole network, hence, the complexity of the information synchronization may be lowered. And at the same time, as the routing paths are calculated by using the centralized method, the problem of routing loop will not occur, and stability of the network may be improved. Furthermore, as the spread and development of networks, management problems of the networks become more and more prominent. The centralized routing nodes have the topology information on the whole network, are able to provide important information to the management of the network, and facilitate the network management.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

However, in the centralized routing method, there exist no normalized standard and solution for how to perform routing update and maintenance.

In order to alleviate the problems of routing update and maintenance in the centralized routing method, embodiments of the present disclosure provide a centralized routing method and apparatus and a system.

According to a first embodiment of one aspect of the present disclosure, there is provided a centralized routing method, applicable to an ordinary node in a collection network, the method including:
transmitting a routing request packet to a centralized routing node, the routing request packet including an address of a global source node, an address of a global destination node, and routing valid time, of routing requested by the ordinary node;
receiving a routing response packet responded by the centralized routing node; and
parsing the routing response packet to obtain a routing path from the global source node to the global destination node.

According to a second embodiment of one aspect of the present disclosure, there is provided a centralized routing apparatus, applicable to an ordinary node in a collection network, the apparatus including:
a transmitting unit configured to transmit a routing request packet to a centralized routing node, the routing request packet including an address of a global source node, an address of a global destination node, and routing valid time, of routing requested by the ordinary node;
a receiving unit configured to receive a routing response packet responded by the centralized routing node; and
a parsing unit configured to parse the routing response packet to obtain a routing path from the global source node to the global destination node.

According to a third embodiment of one aspect of the present disclosure, there is provided a centralized routing method, applicable to a centralized routing node in a collection network, the method including:
receiving a routing request packet from an ordinary node;
parsing the routing request packet to obtain an address of a global source node, an address of a global destination node, and routing valid time, of routing requested by the ordinary node;
determining a routing path from the global source node to the global destination node according to the routing request packet; and
responding a routing response packet including information on routing from the global source node to the global destination node to the ordinary node.

According to a fourth embodiment of one aspect of the present disclosure, there is provided a centralized routing apparatus, applicable to a centralized routing node in a collection network, the apparatus including:
a receiving unit configured to receive a routing request packet from an ordinary node;
a parsing unit configured to parse the routing request packet to obtain an address of a global source node, an address of a global destination node, and routing valid time, of routing requested by the ordinary node;
a determining unit configured to determine a routing path from the global source node to the global destination node according to the routing request packet; and
a transmitting unit configured to respond a routing response packet including information on routing from the global source node to the global destination node to the ordinary node.

According to a fifth embodiment of one aspect of the present disclosure, there is provided an ordinary node in a collection network, including the centralized routing apparatus described in the second aspect.

According to a sixth embodiment of one aspect of present disclosure, there is provided a centralized routing node in a collection network, including the centralized routing apparatus described in the fourth aspect.

According to a seventh embodiment of one aspect of the present disclosure, there is provided a communication system, including the ordinary node described in the fifth aspect and the centralized routing node described in the sixth aspect.

An advantage of the embodiments of the present disclosure exists in that with the embodiments of the present disclosure, problems of routing update and maintenance in a centralized routing method arealleviated.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of the present disclosure only, and a person of ordinary skill in the art may obtain other accompanying drawings according to these accompanying drawings without making an inventive effort. The invention is described, by way of example only, with reference to the following drawings, in which:
FIG. 1 is a schematic diagram of a process of constructing a network by nodes;
FIGs. 2a and 2b are schematic diagrams of uploading topology information by an ordinary node;
FIG. 3 is a schematic diagram of transmitting data by an ordinary node;
FIG. 4 is a flowchart of the centralized routing method of Embodiment 1;
FIG. 5 is a flowchart of transmitting a routing request packet by an ordinary node;
FIG 6 is a flowchart of processing a routing response packet by an ordinary node;
FIG. 7 is a flowchart of processing a routing error packet by an ordinary node;
FIG. 8 is a schematic diagram of a structure of the centralized routing apparatus of Embodiment 2;
FIG. 9 is a flowchart of the centralized routing method of Embodiment 3;
FIG. 10 is a flowchart of processing a routing request packet by a centralized routing node;
FIG. 11 is a flowchart of processing a routing error packet by a centralized routing node;
FIG. 12 is a flowchart of updating routing information by a centralized routing node;
FIG. 13 is a schematic diagram of a structure of the centralized routing apparatus of Embodiment 4;
FIG. 14 is a schematic diagram of a structure of the ordinary node of Embodiment 5; and
FIG. 15 is a schematic diagram of a structure of the centralized routing node of Embodiment 6.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

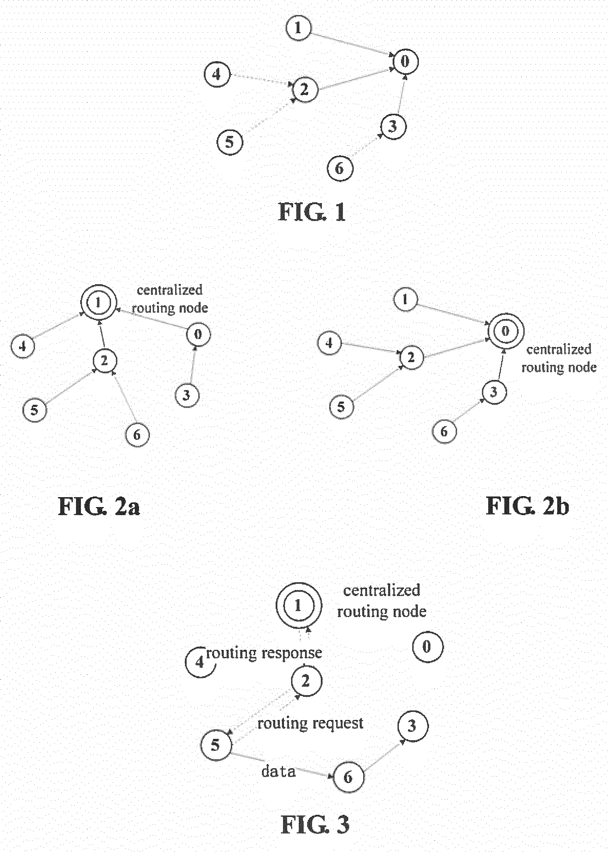

A network is a system consisting of a large quantity of nodes operated in a coordinated manner. In the network, some nodes that have links capable of direct communication are referred to as neighboring nodes. And when nodes incapable of direct communication transmit data to each other, other nodes are needed to forward the data. FIG 1 briefly describes a process of constructing a network by nodes. In FIG. 1, a node 0 is a network starting node, which selects network parameters for the network, such as a network name, safety settings, and communication channels, etc. in different network protocols, the network starting node has different names. For example, in a Zigbee network, the network starting node is named as a coordinator. And other nodes can only join in the network by obtaining the network parameters from those nodes having joined in the network. In FIG 1, the node 0 finishes initialization of the network, and nodes 1, 2 and 3 are neighboring nodes of the node 0, which obtain the network parameters from the node 0, and then join in the network. Nodes 4, 5 and 6 have not joined in the network, and they search nodes in the neighboring nodes having joined in the network to select an optimal node to obtain the network parameters. The nodes 4 and 5 join in the network through the node 2, and the node 6 joins in the network through the node 3. If a node A obtains the network parameters through node B and then joins in the network, the node B is referred to as a parent node of the node A, and the node A is referred to as a child node of the node B. hence, the node 0 is a parent node of the nodes 1, 2 and 3, the node 2 is a parent node of the nodes 4 and 5, and the node 3 is a parent node of the node 6. In the process of joining the network, a parent-child relationship between the nodes forms a tree structure, a root node of which being a starting node of the network, as shown in FIG 1.

In the centralized routing method, the centralized routing node obtains topology information of the whole network, and calculates routing paths for the ordinary node in the network. Hence, the ordinary node in the network needs to transmit local topology information to the centralized routing node. The topology information of the ordinary node refers to a state of a link between the node and its neighboring node. The process of obtaining the topology information by the centralized routing node is a process of data collection, hence, the network also forms a tree structure, as shown in FIGs 2a and 2b. In FIGs 2a and 2b, a connection line between nodes directs from a node to its routing node. For example, in FIG 2a, the node 2 is a routing node of the node 6, and in reporting the topology information, the node 6 first transmits a data packet to the node 2; then the node 2 forwards the data packet to its routing node; and finally, the data packet is transmitted to the centralized routing node. Uploading the topology information by a node is of a tree structure, and a process of joining in the network by a node is also of a tree structure. It can be seen from comparison of FIGs. 1 and 2b, if the centralized routing node is the starting node of the network, a node may use the tree structure in joining in the network to upload the topology information of the node. And in this case, the routing node of the node is a parent node of the node in joining in the network.

FIG. 3 is an example of transmitting data by an ordinary node. In FIG 3, the node 5 needs to transmit a data packet to the node 3. The node 3 is not a neighboring node of the node 5, hence, the node 5 cannot directly transmit the data packet to the node 3, and transmission of the data packet can only be finished through forwarding by a routing node. In order to obtain information on the routing node, the node 5 first transmits a routing request packet to the centralized routing node; after receiving the routing request packet, the centralized routing node calculates optimal routing from the node 5 to the node 3 according to the network topology information, and transmits routing information to the node 5 via a routing response packet; and the node 5 obtains the routing information from the routing response packet, and transmits the data packet to its routing node 6, and the data packet is finally forwarded to the global destination node 3.

In order to alleviate the problems of routing update and maintenance in the centralized routing method, embodiments of the present disclosure provide a centralized routing method and apparatus and a system, which shall be described below with reference to the accompanying drawings.

### Embodiment 1

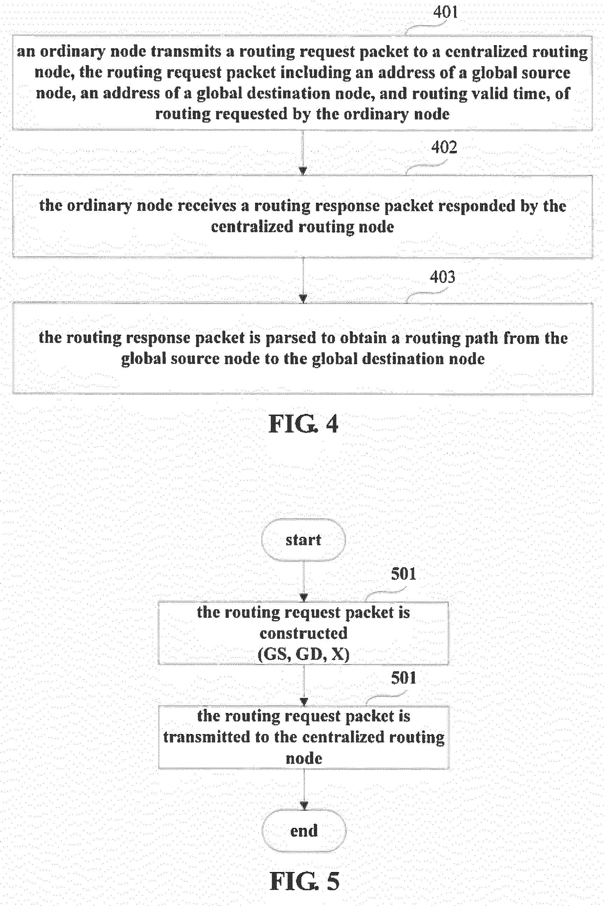

An embodiment of the present disclosure provides a centralized routing method, applicable to an ordinary node in a collection network, the ordinary node here referring to another node in the collection network than a centralized routing node. FIG. 4 is a flowchart of the method. Referring to FIG. 4, the method includes:
step 401: a routing request packet is transmitted to a centralized routing node, the routing request packet including an address of a global source node, an address of a global destination node, and routing valid time, of routing requested by the ordinary node;
step 402: a routing response packet responded by the centralized routing node is received; and
step 403: the routing response packet is parsed to obtain a routing path from the global source node to the global destination node.

In this embodiment, the ordinary node has a function of neighbor table maintenance. As quality and states of links between nodes are basic information for calculating routing, the ordinary node may monitor quality of the link between it and a neighboring node, and save related information in a neighbor table. In this embodiment, the ordinary node may use different parameters to evaluate the link quality, such as latency, a packet receiving ratio, and a signal intensity, etc. Furthermore, the ordinary node may report local neighboring node information to the centralized routing node, and if the neighboring node information changes, the ordinary node may upload updated neighboring node information to the centralized routing node.

In this embodiment, the ordinary node further has a function of data forwarding, and may perform such operations as data packet reception, transmission, and forwarding, etc. And in performing the data packet transmission and forwarding, the ordinary node may request the centralized routing node for routing information, i.e. information on a receiving node of the data packet, by using the method of this embodiment.

In this embodiment, the ordinary node may use a routing table to manage the obtained routing information. Table 1 is an example of a structure of a routing table of the ordinary node, in table 1, such information as an address of a current node, an address of a global destination node, a routing type, the number of hops, a routing address list, and routing valid time, etc. are included. In this embodiment, the routing address list Lᵢ is routing from the current node N to the global destination node GDᵢ, and Hᵢ is a length of routing list. If the routing type Tᵢ is 0, the routing address list contains only an address Rᵢ of a parent node of routing from N to GDᵢ, and the number of hops is 1; and when the current node N needs to transmit data to GDᵢ, the data packet is first forwarded by the node Rᵢ. And if the routing type Tᵢ is 1, the routing address list contains all node {R₁, R₂, ..., Rₖ} in the routing path from N to GDᵢ, and the number of hops is a length of the routing path Hᵢ=k. In this embodiment, the routing valid time is a time length of the routing applied by the node for use.

**Table 1 Routing table of the ordinary node**

| Address of the current node | Address of the global destination node | Routing type | Number of hops | Routing address list | Routing valid time |
|---|---|---|---|---|---|
| N | GD₁ | T₁ | H₁ | L₁ | X₁ |
| | GD₂ | T₂ | H₂ | L₂ | X₂ |
| | ... | ... | ... | ... | ... |
| | GDₘ | Tm | Hm | Lₘ | Xₘ |

In this embodiment, in order to obtain the information on the receiving node of the data packet, that is, information on routing from a global source node to a global destination node, the ordinary node transmits the routing request packet to the centralized routing node. Table 2 is an example of the routing request packet, in table 2, an address of the global source node, an address of the global destination node and a routing valid time are included.

**Table 2 Routing request packet**

| Address of the global source node | Address of the global destination node | Routing valid time |
|---|---|---|
| GS | GD | X |

FIG. 5 is a flowchart of transmitting the routing request packet by the ordinary node. Referring to FIG 5, the flow includes:
step 501: the ordinary node first constructs information on the routing request packet in transmitting the routing request packet, the information including the address of the global source node GS of the routing, the address of the global destination node GD of the routing and a valid time X used by the routing; wherein, address of the global source node is an address of the ordinary node; and
step 502: then the ordinary node transmits the routing request packet to the centralized routing node; wherein, if the ordinary node and the centralized routing node cannot communicate with each other directly, the routing request packet needs to be transmitted to the centralized routing node in a multi-hop manner, hence, the ordinary node needs to maintain the routing path to the centralized routing node; the ordinary node may obtain the routing path to the centralized routing node by using other routing mechanisms. And if the centralized routing node is a starting node of the network, the ordinary node may use a parent node in joining in the network as a routing node reaching the centralized routing node, as shown in FIG 2b.

In this embodiment, after receiving the routing request packet transmitted by the ordinary node, the centralized routing node will select routing for the ordinary node according to a routing request of the routing request packet (which shall be described in Embodiment 2), and respond corresponding routing information to the ordinary node via a routing response packet. Table 3 is an example of the routing response packet, which is a data packet responding the routing request packet and contains information on the routing from the global source node to the global destination node. In this example, a routing address list in the routing response packet is a routing path from the global source node to the global destination node, and the number of hops is a length of the routing path.

**Table 3 Routing response packet**

| Address of the global source node | Address of the global destination node | Routing type | Number of hops | Routing address list | | | |
|---|---|---|---|---|---|---|---|
| GS | GD | T | H | R₁ | R₂ | ... | R_{H} |

In this embodiment, after receiving the routing response packet, the ordinary node may parse the routing response packet to obtain the routing path from the global source node to the global destination node, such as what is the routing type, how many hops there will be from the ordinary node to the global destination node, and which routing nodes there will be, etc.

In this embodiment, after receiving the routing response packet, the ordinary node may further incorporate contents of the routing response packet into its routing table.

In an implementation, the routing table of the ordinary node contains a routing entry corresponding to the global destination node in the routing response packet, and the ordinary node may replace information on the corresponding routing entry in the routing table with information in the routing response packet; wherein routing valid time in the corresponding routing entry is a valid time of routing requested in the routing request packet.

In another implementation, the routing table of the ordinary node does not contain a routing entry corresponding to the global destination node in the routing response packet, and the ordinary node may add a routing entry corresponding to the information in the routing response packet into its routing table; wherein routing valid time in the added routing entry is a valid time of routing requested in the routing request packet.

In this embodiment, the ordinary node may further monitor routing use time of the routing, and after the routing use time expires, delete routing entry to which the routing corresponds from the routing table.

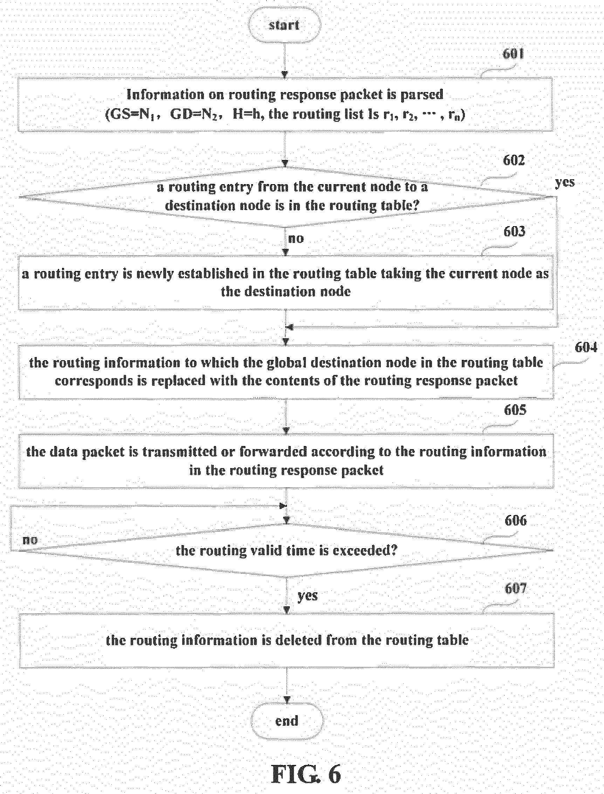

FIG 6 is a flowchart of processing of the ordinary node after receiving the routing response packet. Referring to FIG. 6, the flow includes:
step 601: the ordinary node parses first the contents of the routing response packet after receiving the routing response packet; wherein, the address of the global source node GS and the address of the global destination node GD identify a starting address and a termination address of the routing, the number of hops H is the length of the routing, and the routing list gives addresses of the routing nodes in the routing path; in general, in the routing response packet received by the ordinary node, the address of the global source node is an address of the ordinary node;
step 602: the ordinary node inquires the routing entry to which the global destination node in the routing response packet corresponds in the routing table; step 603 is executed if there is no routing entry of the global destination node; and step 604 is executed if there is the routing entry of the global destination node;
step 603: an entry is newly established in the routing table taking GD as the global destination node;
step 604: contents of the routing entry to which the global destination node in the routing table corresponds is replaced with the contents of the routing response packet;
step 605: the data packet is transmitted or forwarded according to the routing information in the routing response packet;
step 606: alternatively, the ordinary node monitors the routing use time; and step 607 is executed if the routing use time exceeds the routing valid time; otherwise, the routing use time is continuously monitored; and
step 607: the routing information is deleted from the routing table.

In this embodiment, if failure occurs in data forwarding, the routing node may respond a routing error packet regarding the routing response packet. Table 4 is an example of the routing error packet. In the example, the address of the global source node GS and the address of the global destination node GD are able to uniquely determine a routing path, the address of the reporting node RR is a node transmitting a data forwarding error, the address of the failure node ER is a receiving node of forwarded data, and the error type E indicates a reason for data forwarding failure.

**Table 4 Routing error packet**

| Address of the global source node | Address of the global destination node | Address of the reporting node | Address the failure node | Error type |
|---|---|---|---|---|
| GS | GD | RR | ER | E |

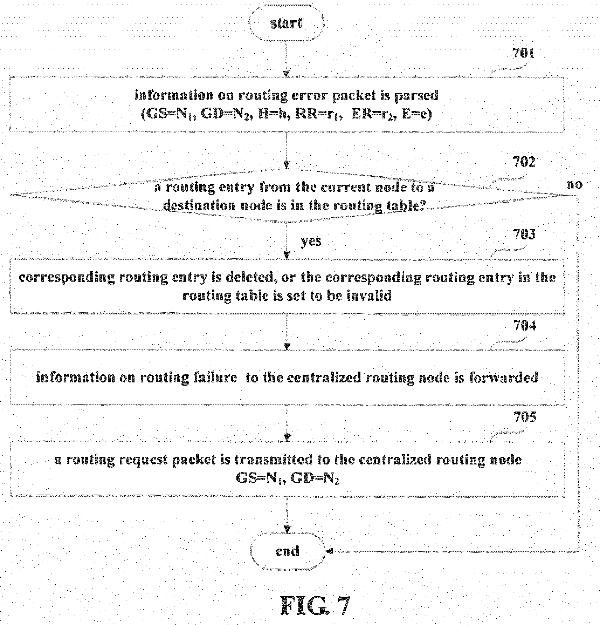

FIG 7 is a flowchart of the ordinary node after receiving the routing error packet. Referring to FIG. 7, the flow includes:
step 701: the ordinary node parses first contents of the routing error packet after receiving the routing error packet;
step 702: then the ordinary node finds a routing entry from the current node to a destination address in the routing table; step 703 is executed if the routing entry is found; otherwise, the process is terminated;
step 703: corresponding routing entry is deleted from the routing table, or the corresponding routing entry in the routing table is set to be invalid;
step 704: the ordinary node forwards information on routing failure to the centralized routing node; and
step 705: alternatively, the ordinary node retransmits a routing request packet to the centralized routing node if the ordinary node still has data packets to be transmitted to the destination node.

With the embodiment of the present disclosure, problems of routing update and maintenance in a centralized routing method are alleviated.

### Embodiment 2

An embodiment of the present disclosure provides a centralized routing apparatus, applicable to an ordinary node in a collection network. As principles of the apparatus are similar to that of the method of Embodiment 1, the implementation of the method of Embodiment 1 may be referred to for the implementation of the apparatus, with identical contents being not going to be described herein any further.

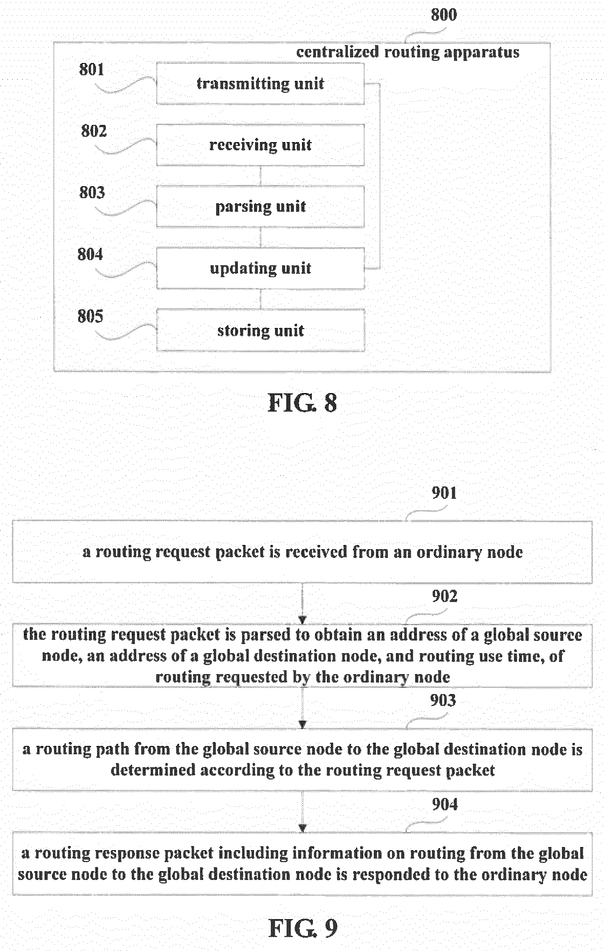

FIG. 8 is a schematic diagram of a structure of the centralized routing apparatus of this embodiment. Referring to FIG. 8, the apparatus 800 includes a transmitting unit 801, a receiving unit 802 and a parsing unit 803; wherein,
the transmitting unit 801 is configured to transmit a routing request packet to a centralized routing node, the routing request packet including an address of a global source node, an address of a global destination node, and routing valid time, of routing requested by the ordinary node;
the receiving unit 802 is configured to receive a routing response packet responded by the centralized routing node;
and the parsing unit 803 is configured to parse the routing response packet to obtain a routing path from the global source node to the global destination node.

In this embodiment, the apparatus may further include an updating unit 804 configured to combine information in the routing response packet into a routing table.

In an implementation, if the routing table contains a routing entry corresponding to the global destination node in the routing response packet, the updating unit 804 replaces information on the corresponding routing entry in the routing table with information in the routing response packet; wherein routing valid time of the corresponding routing entry is routing valid time in the routing request packet.

In another implementation, if the routing table does not contain a routing entry corresponding to the global destination node in the routing response packet, the updating unit 804 adds a routing entry corresponding to the information in the routing response packet into the routing table, wherein routing valid time of the routing entry is routing valid time in the routing request packet.

In this embodiment, the updating unit 804 may further delete the routing entry from the routing table when the routing valid time of the routing entry expires.

In this embodiment, the receiving unit 802 may further receive a routing error packet. The parsing unit 803 may parse the routing error packet to obtain an address of a global source node, an address of a global destination node, an address of a reporting node, an address of a failure node, in which a routing error occurs, and a type of error. The updating unit 804 may delete a corresponding routing entry or set a state of the corresponding routing entry as being invalid when the address of the global source node and the address of the global destination node exist in the routing table. And the transmitting unit 801 may transmit routing error information and/or routing request packets including a routing request to the centralized routing node.

In this embodiment, the apparatus 800 may further include a storing unit 805 configured to store the above routing table, and the above neighbor table, etc.

With the apparatus of this embodiment, problems of routing update and maintenance in a centralized routing method are alleviated.

### Embodiment 3

An embodiment of the present disclosure provides a centralized routing method, applicable to a centralized routing node in a collection network, and being processing at a centralized routing node side corresponding to the method of Embodiment 1, with contents identical to those in Embodiment 1 being not going to be described herein any further. FIG. 9 is a flowchart of the method. Referring to FIG 9, the method includes:
step 901: a routing request packet is received from an ordinary node;
step 902: the routing request packet is parsed to obtain an address of a global source node, an address of a global destination node, and routing valid time, of routing requested by the ordinary node;
step 903: a routing path from the global source node to the global destination node is determined according to the routing request packet; and
step 904: a routing response packet including information on routing from the global source node to the global destination node is responded to the ordinary node.

In this embodiment, as described above, the ordinary node may upload information on its neighbor table to the centralized routing node, the neighbor table containing states of links between the ordinary node and its neighboring nodes. The centralized routing node may collect information on neighbor tables of all ordinary nodes in the network, so as to obtain a topological relationship of the whole network, maintain and manage topology information on the whole network, and calculate routing paths between the nodes by using a routing algorithm according to the topology information, thereby selecting routing for the ordinary node according to the routing request packet containing a routing request reported by the ordinary node, and manage and maintain the calculated routing paths.

In this embodiment, the network topology refers to connection relationships between the nodes in the network. In this embodiment, the centralized routing node may manage the topology information of the network by using a network topology table. The network topology table contains quality of a link between any two nodes.

In this embodiment, the centralized routing node may calculate the routing paths by using any routing algorithm according to the network topology information, such as a Dijkstra algorithm, and a Bellman-Ford algorithm, etc.; however, this embodiment is not limited thereto.

In this embodiment, the centralized routing node may manage the calculated routing paths by using a routing table. Table 5 is an example of the routing table of the centralized routing node. Information on routing from a node GSᵢ to a global destination node GDᵢⱼ is stored in this routing table; where, Lᵢⱼ is an address of a node in a routing path, Hᵢⱼ is a length of a routing path, and Xᵢⱼ is a valid time used by a path.

**Table 5 Routing table of the centralized routing node**

| Address of the global source node | Address of the global destination node | Routing type | Number of hops | Routing address list | Valid time |
|---|---|---|---|---|---|
| GS₁ | GD₁₁ | T₁₁ | H₁₁ | L₁₁ | X₁₁ |
| | ... | ... | ... | ... | ... |
| | GD₁ₘ | T₁ₘ | H₁ₘ | L₁ₘ | X₁ₘ |
| GS₂ | GD₂₁ | T₂₁ | H₂₁ | L₂₁ | X₂₁ |
| | ... | ... | ... | ... | ... |
| | GD₂ₙ | T₂ₙ | H2n | L₂ₙ | X₂ₙ |
| ... | ... | ... | ... | ... | ... |

In this embodiment, the centralized routing node may parse the routing request packet after receiving the routing request packet from the ordinary node, so as to obtain the address of the global source node, the address of the global destination node, and the routing valid time, of the routing requested by the ordinary node, and select a routing path for the ordinary node accordingly.

In an implementation, if the routing table contains the routing path from the global source node to the global destination node, the centralized routing node may determine the routing path from the global source node to the global destination node accordingly.

In another implementation, if the routing table does not contain the routing path from the global source node to the global destination node, the centralized routing node may calculate the routing path from the global source node to the global destination node according to the information in the network topology table, with a particular calculation method being not limited herein. Alternatively, the centralized routing node may further save the calculated routing path in the routing table. In the routing table, the valid time is the routing valid time in the routing request packet. Alternatively, after the valid time of the routing path expires, the centralized routing node may further delete it from its routing table.

In this embodiment, the centralized routing node may respond the ordinary node with a routing response packet after selecting the routing path for the ordinary node according to the routing request packet of the ordinary node. The contents of the routing response packet have been described in Embodiment 1, and shall not be described herein any further.

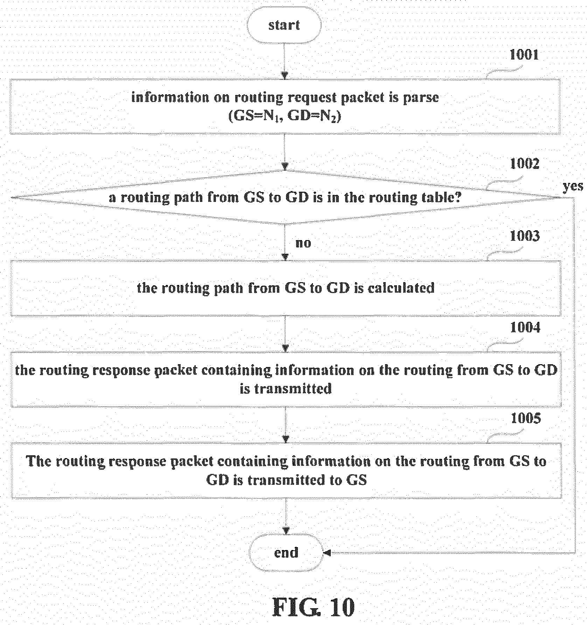

FIG 10 is a flowchart of processing by the centralized routing node after receiving the routing request packet. Referring to FIG 10, the flow includes:
step 1001: the centralized routing node parses the contents of the routing request packet after receiving the routing request packet, so as to obtain the address of the global source node GS and the address of the global destination node GD;
step 1002: the centralized routing node then searches the routing table to look up a routing path from GS to GD; step 1003 is executed if there exists no routing path from GS to GD; and step 1005 is executed if there exists a routing path from GS to GD;
step 1003: the routing path from GS to GD is calculated;
step 1004: the routing path obtained through calculation is saved in the routing table; and
step 1005: the routing response packet containing information on the routing from GS to GD is transmitted.

In this embodiment, if the centralized routing node receives a routing error packet, it may parse the routing error packet, so as to obtain the address of the global source node, the address of the global destination node, the address of the reporting node, and the address of the failure node, in which the routing error occurs, and delete the routing paths from the global source node to the global destination node from the routing table when the routing table contains the routing paths from the global source node to the global destination node, and a failed link exists in the routing paths in the routing table.

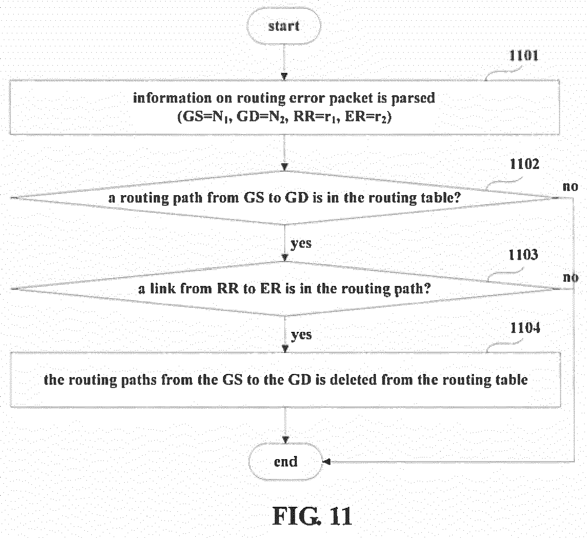

FIG 11 is a flowchart of processing by the centralized routing node after receiving the routing error packet. Referring to FIG. 11, the flow includes:
step 1101: the centralized routing node parses the routing error packet, so as to obtain GS and GD where routing errors occur;
step 1102: the centralized routing node searches the routing table; the processing is terminated if there exists no routing path from the GS to the GD; otherwise, step 1103 is executed;
step 1103: the centralized routing node finds a link between an error reporting node and an error routing node from the searched routing paths; step 1104 is executed if the link exists in the routing paths; otherwise, the processing is terminated; and
step 1104: the centralized routing node deletes the routing paths from the GS to the GD.

In this embodiment, if the network topology changes, the centralized routing node may further update routing paths in the routing table affected by the change of the network topology.

In an implementation, if the routing paths affected by the change of the network topology reach the routing valid time, the centralized routing node deletes entries in the routing table corresponding to the routing paths.

In another implementation, if the routing paths affected by the change of the network topology do not reach the routing valid time, the centralized routing node may calculate a routing cost of the routing paths and a routing cost of an optimal routing path between the global source node and the global destination node to which the routing paths correspond, and update routing information in the routing table to which the routing paths correspond according to the optimal routing path when a difference between the above two costs is greater than a first threshold and a remaining routing valid time is greater than a second threshold. Thereafter, alternatively, the centralized routing node may transmit a routing response packet containing the optimal routing path to the global source node (the global source node to which the routing path corresponds). In this implementation, the first threshold and the second threshold are predetermined, a conventional method may be used as a method for calculating the routing cost, and content of the routing response packet is as described above.

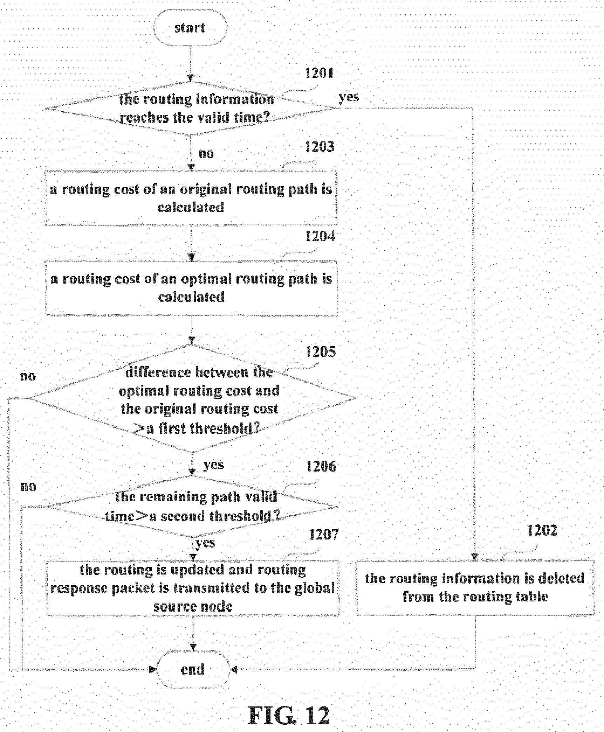

FIG 12 is a flowchart of updating routing by the centralized routing node in discovering that the network topology changes. Referring to FIG. 12, the flow includes:
step 1201: the centralized routing node judges first whether the routing information reaches the valid time; and step 1202 is executed if yes; otherwise, step 1203 is executed;
step 1202: the routing information is deleted;
step 1203: the centralized routing node calculates a routing cost of an original routing path;
step 1204: the centralized routing node calculates a routing cost of an optimal routing path between a global source node and a global destination node in the original routing path;
step 1205: the centralized routing node compares the routing costs of the above optimal routing path and the original routing path according to calculation results of steps 1203 and 1204; the routing is not updated and the processing is terminated if a difference between the routing costs is less than a threshold; and step 1206 is executed if the difference is greater than the threshold;
step 1206: the routing is not updated and the processing is terminated if the remaining valid time of the current routing is less than a threshold; and step 1207 is executed if the remaining valid time is greater than the threshold; and
step 1207: the routing is updated and updated routing information is transmitted to the global source node of the routing path via a routing response packet.

With the method of this embodiment, problems of routing update and maintenance in a centralized routing method are alleviated.

### Embodiment 4

An embodiment of the present disclosure provides a centralized routing apparatus, applicable to a centralized routing node in a collection network. As principles of the apparatus are similar to that of the method of Embodiment 3, the implementation of the method of Embodiment 3 may be referred to for the implementation of the apparatus, with identical contents being not going to be described herein any further.

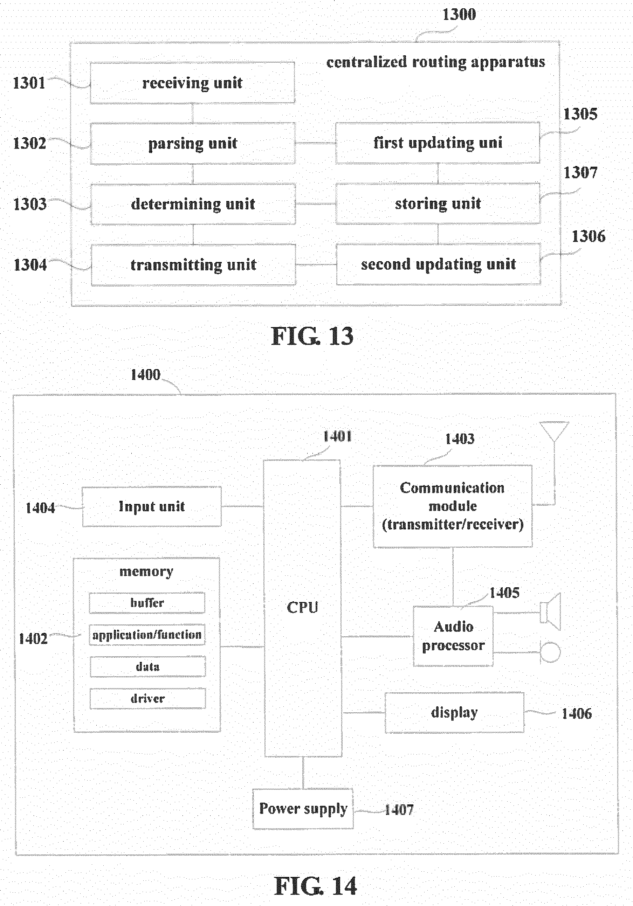

FIG. 13 is a schematic diagram of a structure of the centralized routing apparatus of this embodiment. Referring to FIG. 13, the apparatus 1300 includes a receiving unit 1301, a parsing unit 1302, a determining unit 1303 and a transmitting unit 1304; wherein,
the receiving unit 1301 is configured to receive a routing request packet from an ordinary node; wherein, content of the routing request packet has been described in detail in Embodiment 1, and is incorporated herein, which shall not be described herein any further;
the parsing unit 1302 is configured to parse the routing request packet, so as to obtain an address of a global source node, an address of a global destination node, and routing valid time, of routing requested by the ordinary node;
the determining unit 1303 is configured to determine a routing path from the global source node to the global destination node according to the routing request packet; wherein, if a routing table contains the routing path from the global source node to the global destination node, the determining unit 1303 determines the routing path from the global source node to the global destination node according to the routing path, and if the routing table does not contain the routing path from the global source node to the global destination node, the determining unit 1303 calculates the routing path from the global source node to the global destination node according to information in a network topology table, and saves the calculated routing path in the routing table;
and the transmitting unit 1304 is configured to respond a routing response packet including information on routing from the global source node to the global destination node to the ordinary node; wherein, content of the routing response packet has been described in detail in Embodiment 1, and is incorporated herein, which shall not be described herein any further.

In an implementation of this embodiment, the receiving unit 1301 may further receive a routing error packet; the parsing unit 1302 may further parse the routing error packet, so as to obtain an address of a global source node, an address of a global destination node, an address of a reporting node, and an address of a failure node, in which a routing error occurs. In this implementation, the apparatus 1300 further includes: a first updating unit 1305 configured to look up the routing table, and when the routing table includes the routing path from the global source node to the global destination node and a link in which the error occurs exists in the routing path of the routing table, delete the routing path between the global source node and the global destination node in the routing table.

In an implementation of this embodiment, the apparatus 1300 further includes: a second updating unit 1306 configured to, when network topology changes, update a routing path in the routing table that is affected by the change of the network topology.

In this implementation, the second updating unit 1306 may look up the routing table, deletes an entry in the routing table corresponding to the routing path when the routing path reaches the routing valid time, calculate a routing cost of the routing path and a routing cost of an optimal routing path between the global source node and the global destination node to which the routing path corresponds when the routing path does not reach the routing valid time, and updates routing information in the routing table to which the routing path corresponds according to the optimal routing path if a difference between the routing cost of the routing path and the routing cost of the optimal routing path is greater than a first threshold and remaining routing valid time is greater than a second threshold; thus the transmitting unit 1304 transmits a routing response packet including the optimal routing path to the global source node.

In this embodiment, the apparatus 1300 may further include a storing unit 1307 configured to store a routing table of the centralized routing node, and a network topology table, etc.

With the apparatus of this embodiment, problems of routing update and maintenance in a centralized routing method are alleviated.

### Embodiment 5

An embodiment of the present disclosure provides an ordinary node, including the centralized routing apparatus as described in Embodiment 2.

FIG. 14 is a schematic diagram of a structure of the ordinary node of the embodiment of the present disclosure. As shown in FIG. 14, the ordinary node 1400 may include a central processing unit 1401 and a memory 1402, the memory 1402 being coupled to the central processing unit 1401. It should be noted that this figure is illustrative only, and other types of structures may also be used, so as to supplement or replace this structure and achieve telecommunications function or other functions.

In an implementation, the functions of the centralized routing apparatus may be integrated into the central processing unit 1401.

In another implementation, the centralized routing apparatus and the central processing unit 1401 may be configured separately. For example, the centralized routing apparatus may be configured as a chip connected to the central processing unit 1401, with its functions being realized under control of the central processing unit 1401.

As shown in FIG. 14, the ordinary node 1400 may further include a communication module 1403, an input unit 1404, an audio processing unit 1405, a display 1406, and a power supply 1407. It should be noted that the ordinary node 1400 does not necessarily include all the parts shown in FIG. 14, and furthermore, the ordinary node 1400 may include parts not shown in FIG. 14, and the related art may be referred to.

As shown in FIG. 14, the central processing unit 1401 is sometimes referred to as a controller or control, and may include a microprocessor or other processor devices and/or logic devices. The central processing unit 1401 receives input and controls operations of every components of the ordinary node 1400.

In this embodiment, the memory 1402 may be, for example, one or more of a buffer memory, a flash memory, a hard drive, a mobile medium, a volatile memory, a nonvolatile memory, or other suitable devices, which may store the above routing table, and the neighboring table, etc., and may further store a program executing related information. And the central processing unit 1401 may execute the program stored in the memory 1402, so as to realize information storage or processing, etc. Functions of other parts are similar to those of the related art, which shall not be described herein any further. The parts of the ordinary node 1400 may be realized by specific hardware, firmware, software, or any combination thereof, without departing from the scope of the present disclosure.

With the ordinary node of this embodiment, problems of routing update and maintenance in a centralized routing method are alleviated.

### Embodiment 6

An embodiment of the present disclosure provides a centralized routing node, including the centralized routing apparatus as described in Embodiment 4.

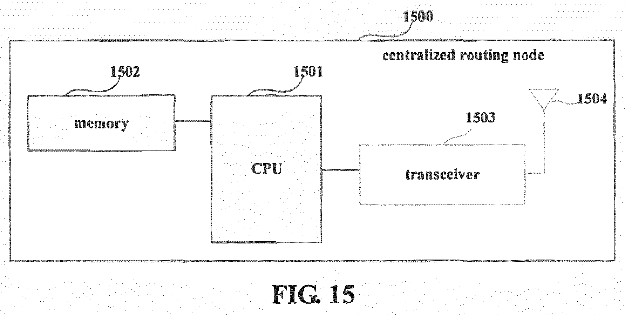

FIG. 15 is a schematic diagram of a structure of the centralized routing node of the embodiment of the present disclosure. As shown in FIG. 15, the centralized routing node 1500 may include a central processing unit (CPU) 1501 and a memory 1502, the memory 1502 being coupled to the central processing unit 1501. In this embodiment, the memory 1502 may store various data, such as the above described routing table, and network topology table, etc.; furthermore, it may store a program executing related information, and execute the program under control of the central processing unit 1501, so as to receive various data transmitted by other nodes, and transmit various data packets to the other nodes.

In an implementation, the functions of the centralized routing apparatus of Embodiment 4 may be integrated into the central processing unit 1501.

In another implementation, the centralized routing apparatus of Embodiment 4 and the central processing unit 1501 may be configured separately. For example, the centralized routing apparatus may be configured as a chip connected to the central processing unit 1501, with its functions being realized under control of the central processing unit 1501.

As shown in FIG. 15, the centralized routing node 1500 may further include a transceiver 1503, and an antenna 1504, etc.; wherein, functions of the above parts are similar to those in the related art, and shall not be described herein any further. It should be noted that the centralized routing node 1500 does not necessarily include all the parts shown in FIG. 15, and furthermore, the centralized routing node 1500 may include parts not shown in FIG. 15, and the related art may be referred to.

With the centralized routing node of this embodiment, problems of routing update and maintenance in a centralized routing method are alleviated.

### Embodiment 7

An embodiment of the present disclosure provides a communication system, including a centralized routing node and an ordinary node, the centralized routing node being realized by the centralized routing node 1500 of Embodiment 6, and the ordinary node being realized by the ordinary node 1400 of Embodiment 5. As the centralized routing node 1500 and the ordinary node 1400 have been described in detail in Embodiment 6 and Embodiment 5, contents of them are incorporated herein, which shall not be described herein any further.

With the communication system of this embodiment, problems of routing update and maintenance in a centralized routing method are alleviated.

An embodiment of the present disclosure provides a computer-readable program, wherein when the program is executed in a centralized routing apparatus or a centralized routing node, the program enables a computer to carry out the method as described in Embodiment 3 in the centralized routing apparatus or the centralized routing node.

An embodiment of the present disclosure provides a storage medium in which a computer-readable program is stored, wherein the computer-readable program enables a computer to carry out the method as described in Embodiment 3 in a centralized routing apparatus or a centralized routing node.

An embodiment of the present disclosure further provides a computer-readable program, wherein when the program is executed in a centralized routing apparatus or an ordinary node, the program enables a computer to carry out the method as described in Embodiment 1 in the centralized routing apparatus or the ordinary node.

An embodiment of the present disclosure provides a storage medium in which a computer-readable program is stored, wherein the computer-readable program enables a computer to carry out the method as described in Embodiment 1 in a centralized routing apparatus or an ordinary node.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

For the implementation of the present disclosure containing the above embodiments, following supplements are further disclosed.
Supplement 1. A centralized routing apparatus, applicable to an ordinary node in a collection network, the apparatus including:
   a transmitting unit configured to transmit a routing request packet to a centralized routing node, the routing request packet including an address of a global source node, an address of a global destination node, and routing valid time, of routing requested by the ordinary node;
   a receiving unit configured to receive a routing response packet responded by the centralized routing node; and
   a parsing unit configured to parse the routing response packet to obtain a routing path from the global source node to the global destination node.
Supplement 2. The apparatus according to supplement 1, wherein the apparatus further includes:
   an updating unit configured to combine information in the routing response packet into a routing table.
Supplement 3. The apparatus according to supplement 2, wherein the updating unit is configured to: when the routing table includes a routing entry corresponding to the global destination node in the routing response packet, replace information on the corresponding routing entry in the routing table with information in the routing response packet, wherein routing valid time in the corresponding routing entry is routing valid time in the routing request packet; and when the routing table does not include a routing entry corresponding to the global destination node in the routing response packet, add a routing entry corresponding to the information in the routing response packet into the routing table, wherein routing valid time in the routing entry is routing valid time in the routing request packet.
Supplement 4. The apparatus according to supplement 3, wherein,
   the updating unit deletes the routing entry from the routing table when the routing valid time in the routing entry expires.
Supplement 5. The apparatus according to supplement 2, wherein,
   the receiving unit is further configured to receive a routing error packet;
   the parsing unit is further configured to parse the routing error packet, to obtain an address of a global source node, an address of a global destination node, an address of a reporting node, an address of a failure node, in which a routing error occurs, and a type of error;
   the updating unit is further configured to delete a corresponding routing entry or set a state of the corresponding routing entry as being invalid when the address of the global source node and the address of the global destination node exist in the routing table;
   and the transmitting unit is further configured to transmit routing error information and/or routing request packets including a routing request to the centralized routing node.
Supplement 6. The apparatus according to supplement 1, wherein the apparatus further includes:
   a storing unit configured to store the routing table and a neighbor table.
Supplement 7. A centralized routing apparatus, applicable to a centralized routing node in a collection network, the apparatus including:
   a receiving unit configured to receive a routing request packet from an ordinary node;
   a parsing unit configured to parse the routing request packet to obtain an address of a global source node, an address of a global destination node, and routing valid time, of routing requested by the ordinary node;
a determining unit configured to determine a routing path from the global source node to the global destination node according to the routing request packet; and
a transmitting unit configured to respond a routing response packet including information on routing from the global source node to the global destination node to the ordinary node.
Supplement 8. The apparatus according to supplement 7, wherein when a routing table includes the routing path from the global source node to the global destination node, the determining unit determines the routing path from the global source node to the global destination node according to the routing path, and when the routing table does not include the routing path from the global source node to the global destination node, the determining unit calculates the routing path from the global source node to the global destination node according to information in a network topology table, and saves the calculated routing path in the routing table.
Supplement 9. The apparatus according to supplement 7, wherein,
   the receiving unit is further configured to receive a routing error packet;
   the parsing unit is further configured to parse the routing error packet to obtain an address of a global source node, an address of a global destination node, an address of a reporting node, and an address of a failure node, in which a routing error occurs;
   and the apparatus further includes:
   a first updating unit configured to look up the routing table, and when the routing table includes the routing path from the global source node to the global destination node and a link in which an error occurs exists in the routing path of the routing table, delete the routing path from the global source node to the global destination node in the routing table.
Supplement 10. The apparatus according to supplement 7, wherein the apparatus further includes:
   a second updating unit configured to, when network topology changes, update a routing path in the routing table that is affected by the change of the network topology.
Supplement 11. The apparatus according to supplement 10, wherein,
   the second updating unit looks up the routing table, deletes an entry in the routing
   table corresponding to the routing path when the routing path reaches the routing valid time, calculates a routing cost of the routing path and a routing cost of an optimal routing path between the global source node and the global destination node to which the routing path corresponds when the routing path does not reach the routing valid time, and updates routing information in the routing table to which the routing path corresponds according to the optimal routing path if a difference between the routing cost of the routing path and the routing cost of the optimal routing path is greater than a first threshold and remaining routing valid time is greater than a second threshold;
   and the transmitting unit transmits a routing response packet including the optimal routing path to the global source node.
Supplement 12. The apparatus according to supplement 7, wherein the apparatus further includes:
   a storing unit configured to store the routing table and a network topology table.
Supplement 13. A communication system, including an ordinary node and a centralized node; wherein,
   the ordinary node is configured to:
   transmit a routing request packet to the centralized routing node, the routing request packet including an address of a global source node, an address of a global destination node, and routing valid time, of routing requested by the ordinary node;
   receive a routing response packet responded by the centralized routing node; and
   parse the routing response packet to obtain a routing path from the global source node to the global destination node;
   and the centralized routing node is configured to:
      receive the routing request packet from the ordinary node;
      parse the routing request packet to obtain an address of a global source node, an address of a global destination node, and routing valid time, of routing requested by the ordinary node;
      determine a routing path from the global source node to the global destination node according to the routing request packet; and
      respond a routing response packet including information on routing from the global source node to the global destination node to the ordinary node.

## Claims

1. A centralized routing apparatus, applicable to an ordinary node in a collection network, the apparatus comprising:
a transmitting unit configured to transmit a routing request packet to a centralized routing node, the routing request packet comprising an address of a global source node, an address of a global destination node, and routing valid time, of routing requested by the ordinary node;
a receiving unit configured to receive a routing response packet responded by the centralized routing node; and
a parsing unit configured to parse the routing response packet to obtain a routing path from the global source node to the global destination node.

2. The apparatus according to claim 1, wherein the apparatus further comprises:
an updating unit configured to combine information in the routing response packet into a routing table.

3. The apparatus according to claim 2, wherein the updating unit is configured to:
when the routing table comprises a routing entry corresponding to the global destination node in the routing response packet, replace information on the corresponding routing entry in the routing table with information in the routing response packet, wherein routing valid time in the corresponding routing entry is routing valid time in the routing request packet; and when the routing table does not comprise a routing entry corresponding to the global destination node in the routing response packet, add a routing entry corresponding to the information in the routing response packet into the routing table, wherein routing valid time in the routing entry is routing valid time in the routing request packet.

4. The apparatus according to claim 3, wherein,
the updating unit deletes the routing entry from the routing table when the routing valid time in the routing entry expires.

5. The apparatus according to any of claims 2, 3 and 4, wherein,
the receiving unit is further configured to receive a routing error packet;
the parsing unit is further configured to parse the routing error packet to obtain an address of a global source node, an address of a global destination node, an address of a reporting node, an address of a failure node, in which a routing error occurs, and a type of error;
the updating unit is further configured to delete a corresponding routing entry or set a state of the corresponding routing entry as being invalid when the address of the global source node and the address of the global destination node exist in the routing table;
and the transmitting unit is further configured to transmit routing error information and/or routing request packets comprising a routing request to the centralized routing node.

6. The apparatus according to any of claims 1-5, wherein the apparatus further includes:
a storing unit configured to store the routing table and a neighbor table.

7. A centralized routing apparatus, applicable to a centralized routing node in a collection network, the apparatus comprising:
a receiving unit configured to receive a routing request packet from an ordinary node;
a parsing unit configured to parse the routing request packet to obtain an address of a global source node, an address of a global destination node, and routing valid time, of routing requested by the ordinary node;
a determining unit configured to determine a routing path from the global source node to the global destination node according to the routing request packet; and
a transmitting unit configured to respond a routing response packet comprising information on routing from the global source node to the global destination node to the ordinary node.

8. The apparatus according to claim 7, wherein when a routing table comprises the routing path from the global source node to the global destination node, the determining unit determines the routing path from the global source node to the global destination node according to the routing path, and when the routing table does not comprise the routing path from the global source node to the global destination node, the determining unit calculates the routing path from the global source node to the global destination node according to information in a network topology table, and saves the calculated routing path in the routing table.

9. The apparatus according to any of claims 7 and 8, wherein,
the receiving unit is further configured to receive a routing error packet;
the parsing unit is further configured to parse the routing error packet to obtain an address of a global source node, an address of a global destination node, an address of a reporting node, and an address of a failure node, in which a routing error occurs;
and the apparatus further comprises:
a first updating unit configured to look up the routing table, and when the routing table comprises the routing path from the global source node to the global destination node and a link in which an error occurs exists in the routing path of the routing table, delete the routing path from the global source node to the global destination node in the routing table.

10. The apparatus according to claim any of claims 7, 8 and 9, wherein the apparatus further comprises:
a second updating unit configured to, when network topology changes, update a routing path in the routing table that is affected by the change of the network topology.

11. The apparatus according to claim 10, wherein,
the second updating unit looks up the routing table, deletes an entry in the routing table corresponding to the routing path when the routing path reaches the routing valid time, calculates a routing cost of the routing path and a routing cost of an optimal routing path between the global source node and the global destination node to which the routing path corresponds when the routing path does not reach the routing valid time, and updates routing information in the routing table to which the routing path corresponds according to the optimal routing path if a difference between the routing cost of the routing path and the routing cost of the optimal routing path is greater than a first threshold and remaining routing valid time is greater than a second threshold;
and the transmitting unit transmits a routing response packet comprising the optimal routing path to the global source node.

12. The apparatus according to any of claims 7-10, wherein the apparatus further includes:
a storing unit configured to store the routing table and a network topology table.

13. A communication system, including an ordinary node and a centralized node; wherein,
the ordinary node is configured to:
transmit a routing request packet to the centralized routing node, the routing request packet including an address of a global source node, an address of a global destination node, and routing valid time, of routing requested by the ordinary node;
receive a routing response packet responded by the centralized routing node; and
parse the routing response packet to obtain a routing path from the global source node to the global destination node;
and the centralized routing node is configured to:
receive the routing request packet from the ordinary node;
parse the routing request packet to obtain an address of a global source node, an address of a global destination node, and routing valid time, of routing requested by the ordinary node;
determine a routing path from the global source node to the global destination node according to the routing request packet; and
respond a routing response packet including information on routing from the global source node to the global destination node to the ordinary node.
